Europäisches Patentamt

European Patent Office

Office européen des brevets

(11) Publication number: **0 434 395 A1**

(12) ## EUROPEAN PATENT APPLICATION

(21) Application number: 90313924.4

(22) Date of filing: **19.12.90**

(51) Int. Cl.⁵: **F24D 12/02, F22B 37/02**

(30) Priority: **19.12.89 GB 8928621**

(43) Date of publication of application:
**26.06.91 Bulletin 91/26**

(84) Designated Contracting States:
**AT BE CH DE DK ES FR GB GR IT LI LU NL SE**

(71) Applicant: **EMVERTEC LIMITED**
**Suite 106 Signal House Lyon Road**
**Harrow Middlesex, HA1 2BG(GB)**

(72) Inventor: **Vernon, John Richard**
**1 The Woodlands, London Road**
**Harrow-on-the-Hill, Middlesex HA1 3JG(GB)**

(74) Representative: **Gillam, Francis Cyril et al**
**SANDERSON & CO. European Patent**
**Attorneys 34, East Stockwell Street**
**Colchester Essex CO1 1ST(GB)**

(54) **Condensing economisers.**

(57) In a method of operating a condensing economiser for a combustion heating plant and having a sensible heat recovery section (12) and a latent heat recovery section (14), the flow rates and temperatures of the heat exchange fluid are controlled so that the minimum flue gas temperature in the sensible heat recovery section is above the acid dew point of the flue gas, and so that the flue gas is cooled to a temperature below the water dew point for that gas in the latent heat recovery section. Appropriate valves and pipework are provided to allow the establishment of co-current flow in the sensible heat recovery section when burning sulphur-bearing fuels, and counter-current flow when burning sweet fuels. A water spray may be used to cool the flue gas prior to its entry into the latent heat recovery section, to minimise the likelihood of acid condensation occurring.

FIG.1

## CONDENSING ECONOMISERS

This invention relates to a method of operating a condensing economiser, as well as to a condensing economiser installation for use in a combustion heating plant. The invention further relates to a combustion heating plant when provided with a condensing economiser.

It is known to improve the efficiency of a combustion heating plant by installing a heat exchanger in the flue from the plant combustion chamber, to recover sensible heat from the exhaust gases. In addition to the recovery of sensible heat from the gases, it is further known to recover latent heat of condensation from water vapour in the gases resulting from the combustion of the fuel, by cooling the gases to below the dew point of the water vapour therein. A heat exchanger installation arranged to recover both sensible and latent heat from the flue gases is generally known as a condensing economiser.

In our pending European Patent Publication No. 0,368,599 we have described an improved form of condensing economiser which aims at reducing difficulties which can arise from the cooling of flue gases down to relatively low temperatures, to maximise the recovery of the latent heat of condensation. Though such an economiser may operate satisfactorily when essentially non-sulphur-bearing fuels (hereinafter referred to as 'sweet fuels') are burnt, it has been found that acute problems arise if fuels bearing significant amounts of sulphur (hereinafter referred to as 'sulphur-bearing fuels') are burnt, on account of the formation of concentrated sulphuric acid within the economiser.

When a sulphur-bearing fuel such as a hydrocarbon fuel oil is burnt, the sulphur in the fuel is converted to sulphur-dioxide and a small proportion of this is further oxidised to sulphur-trioxide, which has a great affinity for the water vapour which is also present in the flue gas. The sulphur-trioxide is thus converted to sulphuric acid which condenses in a highly concentrated form on surfaces of the heat exchanger having a temperature in the range of up to $160°$ C, depending upon the constituents of the flue gas. Concentrated sulphuric acid at these temperatures is highly corrosive and only by making the economiser from very sophisticated, and hence most expensive, materials can attack by the hot concentrated sulphuric acid be resisted.

When an economiser is used in a multi-fuel plant, it is generally uneconomic to manufacture the economiser from materials able to resist acid attack when sulphur-bearing fuels are burnt. Consequently, though the economiser may be used in a full condensing mode when sweet fuels are burnt, when a sulphur-bearing fuel is burnt the various operating temperatures within the economiser must carefully be controlled so as to ensure that the gases are cooled to a temperature which is safely above the acid dew point for the flue gases, and typically at least $5°$ C above that dew point. The consequence of this is that when the plant is being operated with a sulphur-bearing fuel, the plant efficiency is significantly lower than when a sweet fuel is burnt and the economiser is operating in a full condensing mode.

The present invention aims at minimising the reduction in efficiency resulting from the burning of a sulphur-bearing fuel, as described above, without the need to employ in the economiser heat exchangers constructed from very expensive materials able to resist hot concentrated sulphuric acid attack.

Accordingly, one aspect of the present invention provides a method of operating a flue gas condensing economiser having a sensible heat recovery section, a condensing latent heat recovery section, and means to circulate heat exchange fluid through said sections to recover heat from flue gases passed through the economiser, in which method the temperatures and flow rates of the heat exchange fluids passed respectively through the two sections are controlled so that in the sensible heat recovery section the flue gas is cooled to a temperature higher than the acid dew point of that flue gas, and in the latent heat recovery section the flue gas is cooled to a temperature lower than the water dew point of that gas.

The present invention stems from an appreciation that it is possible to prevent highly concentrated sulphuric acid forming within the condensing section of an economiser if no condensation is allowed to take place at a temperature in the region of the acid dew point for the flue gas; by ensuring that such acid condensation as takes place will occur at a temperature at or below the water dew point for the flue gas, the acid will condense along with the condensation of the water vapour, so immediately leading to the dilution of the acid. Provided the dilution of the sulphuric acid is sufficiently great, the acid is relatively non-corrosive as compared to highly concentrated hot sulphuric acid, and the latent heat recovery heat exchanger may therefore be made of a relatively common material, such as stainless steel.

When a hydrocarbon fuel oil (i.e. a sulphur-bearing fuel) is burnt in a combustion heating plant, the flue gas water dew point generally is in the range of from $40°$ to $50°$ C, and the acid dew point is in the range of from $100°$ to $150°$ C, at excess air values in the range of from 10% to 40%. As a consequence, when performing the method of this invention, the sensible heat recovery section of the economiser should be operated at a temperature of at least 5°C above the acid dew point, and the latent heat recovery section should be operated at a temperature below the water dew point.

For a high-sulphur fuel oil, the quantity of sulphuric acid in gaseous form in the flue gas is approximately 50 volume parts per million (vpm) and the acid dew point is about 150°C. For a low sulphur fuel, the sulphuric acid is present at 2 to 5 vpm and the acid dew point falls to around 120°C. The water vapour which exists in the flue gas is in a far greater proportion (approximately 100,000 vpm) and so by condensing the acid at below the water dew point, the acid and water vapour condense together, giving a condensate contaminated with acid only to a maximum level of approximately 0.2% for high-sulphur fuels, down to 0.02% for low-sulphur fuels, assuming a minimum of 30% water vapour condensation. Such acid concentrations may easily be resisted by materials such as 18/8 austenitic stainless steel. A further advantage arises because the acid is condensed at a temperature well below the dew point thereof, so that most of the acid is removed from the flue gas and is not exhausted to atmosphere.

The temperature of the flue gas may be reduced prior to its entry to the latent heat recovery section to ensure no acid condensation takes place on the surfaces of the latent heat recovery heat exchanger first contacted by the gas, by spraying water into the gas. Such a measure would not ordinarily be required other than when high-sulphur bearing fuels are being burnt in the plant.

In performing the method of this invention, it is preferred for the direction of flow of the heat exchange fluid through the sensible heat recovery section to be generally in the same direction as the flue gas flow through the sensible heat recovery section (so-called co-current flow). This may be contrasted with the usual arrangement for a condensing economiser, where the general direction of heat exchange fluid flow is in opposition to the flue gas flow (so-called counter-current flow).

It will be appreciated that with counter-current flow, the cooled flue gas temperature can be lower than the heated heat exchange fluid temperature, but with co-current flow the temperature of the flue gas leaving the heat exchanger is always higher than the temperature of the heated heat exchange fluid. Since no crossover in temperatures thus occurs, it is possible more accurately to control the minimum temperature of the flue gas leaving the sensible heat recovery section if co-current flow is adopted, as mentioned above.

By regulating the temperature of the heat exchange fluid entering the sensible heat recovery section so that the heat exchanger wall temperature is above the acid dew point, since no crossover takes place, it can be ensured that no acid condensation will take place within the sensible heat recovery section. Conversely, ensuring that the latent heat recovery section surfaces are always wetted, by having a sufficiently low input heat exchange fluid temperature, it can be assured that no acid-only condensation takes place in the latent heat recovery section.

The temperature at the inlet to the sensible heat recovery section can be maintained sufficiently high by recirculating through that section a portion of the heat-exchange fluid already heated therein. A suitable pump may be arranged for this purpose.

The method of operation of this invention may be performed using the same heat exchange fluid for both sections of the economiser, valves controlling the flow of that heat exchange fluid being operated appropriately in order to maintain the conditions with the sections of the economiser within the required limits. Conveniently, for the case where the economiser is used in a water boiler plant, the heat exchange fluid may comprise boiler feed water which is thus pre-heated, prior to being fed to the boiler.

According to a second aspect of the present invention, there is provided a condensing economiser installation having a sensible heat recovery section, a condensing latent heat recovery section, and means to circulate heat exchange fluid through said sections to recover heat from flue gases passed through the economiser, in which installation there are provided control valves arranged to cause counter-current flow for the heat exchange fluid in the sensible heat recovery section when the economiser is to be operated in conjunction with a sweet fuel, and to cause co-current flow through the sensible heat recovery section when the economiser is to be used with a sulphur-bearing fuel.

Preferably, the installation includes further valves which allow the circulation of the same heat exchange fluid through the two sections of the economiser, the flow of that fluid being proportioned and diverted as appropriate in order to obtain the required operating conditions within the two sections of the economiser.

A temperature controlled valve may be arranged to control the flow conditions through the sensible heat recovery section, and specifically to proportion that fluid already heated in the latent heat recovery section between the installation heat exchange fluid outlet and the sensible heat recovery section. In this way, a sufficiently high temperature can be maintained in the sensible heat recovery section to prevent acid condensation taking place therein.

The economiser installation of this invention preferably includes a heat exchanger disposed between the sensible heat recovery section and the latent heat recovery section, along with appropriate pipework and valves whereby the said heat exchanger may be configured to form part of the latent heat recovery section with condensing taking place therein when the installation is operated with sweet fuels, and for the said heat exchanger to form part of the sensible heat recovery section with no condensing taking place therein when the installation is operated with sulphur-bearing fuels.

Means may be provided to spray water into the flue gases on passing from the sensible heat recovery section to the latent heat recovery section, to reduce the temperature of the gases and to increase the water condensation temperature thereof, by taking up water from the spray.

It is preferred for there to be provided a recirculation pump arranged to recirculate through the sensible heat recovery section a portion of the heat exchange fluid already heated in that section, when the installation is being used with a sulphur-bearing fuel. In this way, the wall temperature in the sensible heat recovery section may be controlled to be above the acid dew point for the flue gas, and with co-current flow, the flue gas temperature cannot then fall below the acid-dew point temperature in that section.

This invention extends to a combustion heating plant whenever provided with an economiser installation of this invention as described above, and adapted to operate also in accordance with a method of this invention. Such a plant may comprise a water-heating boiler, in which case the cold boiler feed water may serve as the heat exchange fluid passed through the two sections of the economiser, whereby that water may be pre-heated to enhance the overall efficiency of the boiler. In such a plant, the full flow of the boiler feed water may be passed through the latent heat recovery section of the economiser, and the water heated thereby then appropriately being directed either for co-current or counter-current flow through the sensible heat recovery section, depending upon the nature of the fuel being burnt in the boiler. De-aerating means for the make-up water may be provided, such as a hot-well or de-aerator tank, located typically in the flow path between the latent heat recovery section and the sensible heat recovery section. In the case of co-current flow, with sulphur-bearing fuels, a portion of the water may be recirculated through the sensible heat recovery section. Moreover, if an economiser generally as described in our European Patent Publication No. 0,368,599 is being used, at least some of the heated water from the sensible heat recovery section may be diverted to pass through a reheat heat exchanger, to reheat the flue gases in the manner described in our said European Patent Application.

By way of example only, two specific embodiments of this invention will now be described in detail, reference being made to the accompanying drawings in which:-

Figure 1 diagrammatically shows an economiser installation suitable for use with an external heat sink; and

Figure 2 shows diagrammatically an economiser installation suitable for use with a water-heating boiler, to pre-heat the boiler feed water.

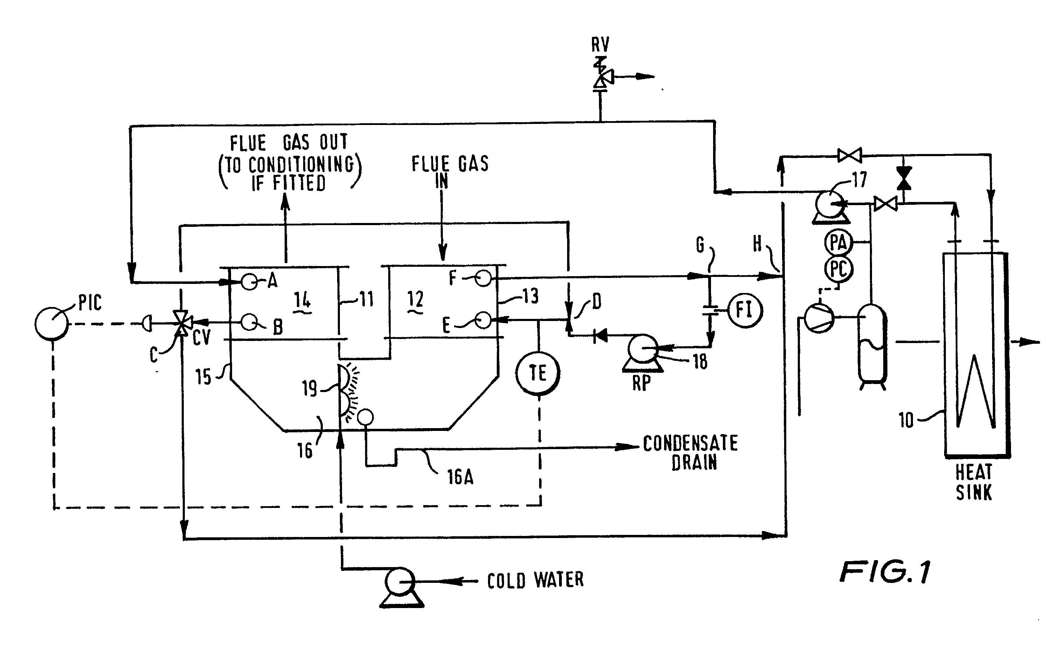

Referring initially to Figure 1, there is shown in diagrammatic form a condensing economiser installation suitable for use with the flue gases of a combustion heating plant (not shown), where the heated heat exchange fluid is used in an external heat sink 10 - such as a space-heating system.

The economiser comprises a U-shaped duct 11 having a first heat exchanger 12 in one limb 13 (the inlet limb) of the duct, and a second heat exchanger 14 in the outlet limb 15. The heat exchanger 12 serves as a sensible heat recovery section of the economiser whereas the heat exchanger 14 serves as a latent heat recovery section. Flue gases from the combustion chamber enter limb 13 to pass through the heat exchanger 12, round the base portion 16 of the duct 11, and then rises upwardly through the heat exchanger 14. Suitable valves and pipework are provided to allow the circulation of heat exchange fluid through the heat exchangers 12 and 14, and through the heat sink 10, the circulation being produced by a pump 17, with counter-current flow in each heat exchanger with respect to the flue gas flow direction. Further pipes and valves are provided, in conjunction with a recirculation pump 18, whereby at least some of the heat exchange fluid heated in heat exchanger 12 may be recirculated through that heat exchanger by the action of the pump 18, depending upon the required mode of operation, as will be described below.

When a sweet fuel (as defined above) is being burnt, the heat exchange fluid is pumped by pump 17 to inlet A of heat exchanger 14, out of outlet B and thence to valve C, which is set to direct all flow to junction D and thence to inlet E of heat exchanger 12. From there, the full fluid flow leaves heat exchanger 12 through outlet F and flows back to the heat sink 10, through junctions G and H.

When sulphur-bearing fuels are burnt, valve C splits the flow from heat exchanger 14, with a portion of the flow being fed through junction H directly back to the heat sink 10. In addition, pump 18 is operated to draw fluid from junction G and pump that fluid through junction D to inlet E, so recirculating through the heat exchanger 12 some of the heat exchange fluid. In this way, heat exchanger 14 is maintained at the lowest possible temperature, to ensure that all portions within that heat exchanger are maintained wet and thus below the water dew point for the flue gas, though the temperature within the sensible heat recovery heat exchanger 12 can be maintained at a temperature sufficiently above the acid dew point of the gas, to ensure that no acid condensation takes place within that heat exchanger. Regulation of the amount of recirculation allows control of the inlet temperature to the heat exchanger 12, so as to ensure that all surfaces within that heat exchanger are well above the acid dew point.

In the above manner, it can be assured that no condensation takes place in the sensible heat recovery section of the economiser; all condensation takes place at below the water dew point, in the latent heat recovery section. The condensate runs from the heat exchanger 14 into the base portion 16 of the duct 11, where it collects and is fed by pipe 16A to a suitable drain.

The arrangement described above may be modified by the provision of further pipes and valves to have co-current flow through the sensible heat exchanger 12 when a sulphur-bearing fuel is being burnt, but to maintain counter-current flow through that heat exchanger when a sweet fuel is being burnt.

A water spray 19, drawing water from any suitable cold source, may be provided in the bottom section of the U-shaped duct 16. When operating with high sulphur-bearing fuels, the temperature of the flue gases passing through the bottom section of the U-shaped duct may be reduced by use of the cold water spray: in this way, no acid condensation may be assured in the initial stages of heat exchanger 14.

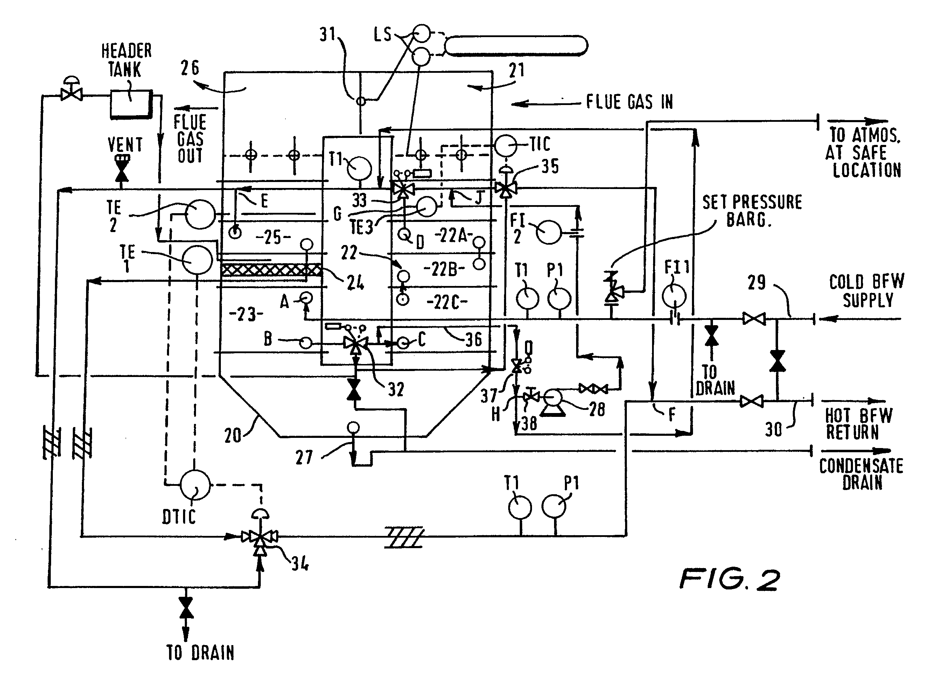

Referring now to Figure 2, there is shown a more complex economiser installation of this invention, intended for use in conjunction with a water boiler, to preheat the cold boiler feed water. The economiser itself is configured much the same as that described in our European Patent Publication No. 0,368,599 and reference should be made to that Specification for a detailed description thereof.

The economiser comprises a U-shaped duct 20 having an inlet 21 leading to one limb in which is located a heat exchanger assembly 22 made from three separate heat exchangers 22A, 22B and 22C, always connected in series, as shown. In the other limb of the duct 20, there is a further heat exchanger 23, a droplet extractor 24 and a reheat heat exchanger 25, in that order in the upward direction of gas flow, as shown, to an outlet 26. A condensate drain 27 is provided at the bottom of the duct 20. Suitable pipes and valves are provided as shown, to allow circulation of boiler feed water through the various heat exchangers, whilst that water is being heated by the hot flue gases passed through the economiser. In addition, a pump 28 is provided in conjunction with associated pipes to allow recirculation of at least some of the water already heated in the assembly 22, when the economiser is operating on sulphur-bearing fuels, as will be described below.

Boiler feed water is supplied to pipe 29 and the heated water leaves the economiser installation by pipe 30 for supply to the boiler. Suitable means may be provided to de-aerate the boiler feed water, if required, in a manner known in art. If the economiser is not to be operated, a damper 31 may be opened, but otherwise the installation operates in the following manner.

When sweet fuels are being burnt, the full flow of the boiler feed water passes from pipe 29 through the heat exchanger 23 from inlet A to outlet B and thence through valve 32 to inlet C of heat exchanger assembly 22. The heated water leaves that assembly through outlet D and valve 33 directs all of the flow to junction E. Valve 34 serves to proportion flow between the two pipes leaving junction E, whereby some of that flow passes through the reheat heat exchanger 25. The proportioning is effected on the basis of temperatures sensed adjacent the reheat heat exchanger 25, whereby the temperature of the flue gas leaving the economiser installation may be at some predetermined value. From the valve 34, the full flow of heated water is supplied to pipe 30. This mode of operation is described in our pending European Patent Application No. 0,368,599.

In this mode of operation, counter-current flow is achieved in both limbs of the duct 20. Heat exchanger 23, as well as the heat exchanger 22C of assembly 22 both operate in a condensing mode, with heat exchangers 22A and 22B serving as sensible heat recovery heat exchangers. The removal from the gas of droplets condensing as a result of the gas passing through relatively cool heat exchanger 22C is assisted by the sudden change in direction of the gas flow, occurring at the bottom of the U-shaped duct 20.

When sulphur-bearing fuels are burnt, the installation is reconfigured so that co-current flow takes place through heat exchanger assembly 22, and some of the heated heat exchange fluid is recirculated through that assembly. Again, the full water flow passes through heat exchanger 23, from inlet A to outlet B, but valve 32 is set so as to divert the full flow to valve 35. This valve 35 directs some of the flow to junction F in pipe 29, with the rest of the flow passing to valve 33, the proportioning being performed on the basis of the temperature sensed at point G. Valve 33 directs all the flow to inlet D of heat exchanger assembly 22.

In this mode, flow through the heat exchanger assembly 22 is co-current with respect to the flue gas, and so leaves the assembly 22 through outlet C. From there, the water passes along pipe 36 to junction H, where a portion of the flow is drawn by pump 28 and recirculated back through assembly 22, via junction J. The remainder of the flow at junction H is fed back into the flow to junction E, by valve 34, so that a suitable amount of hot flow passes through the reheat heat exchanger 25.

Valve 37 is operated in conjunction with valves 32 and 33, to allow assembly 22 to operate either in counter-current or co-current modes, as required, and in the latter case to allow a measure of recirculation, preset by valve 38. When operating with co-current flow, and so with sulphur-bearing fuels, the proportioning performed by valve 35 is set so that the temperature at the inlet D to assembly 22 is above the acid dew point of the flue gas; when co-current flows are employed, the gas outlet temperature from the assembly 22 cannot be below that temperature and so it can be assured that no acid dew point condensation takes place within the assembly 22. By contrast, the full supply of cold boiler feed water is directed through heat exchanger 23, so that all surfaces of that heat exchanger are well below the water dew point of the flue gases and so the surfaces of that heat exchanger remain wet with only very dilute acid condensate.

## Claims

1. A method of operating a flue gas condensing economiser having a sensible heat recovery section (12; (22), a condensing latent heat recovery section (14;23), and means to circulate heat exchange fluid through said sections to recover heat from flue gases passed through the economiser, characterised in that the temperatures and flow rates of the heat exchange fluids passed respectively through the two sections (12,22; 14,23) are controlled so that in the sensible heat recovery section (12,22) the flue gas is cooled to a temperature higher than the acid dew point of that flue gas, and in the latent heat recovery section (14,23) the flue gas is cooled to a temperature lower than the water dew point of that gas.

2. A method according to claim 1, characterised in that the sensible heat recovery section (12,22) of the economiser is operated at a temperature of at least 5°C above the acid dew point, and the latent heat recovery section (14,23) is operated at a temperature below the water dew point.

3. A method according to claim 1 or claim 2, characterised in that the temperature of the flue gas is reduced prior to its entry to the latent heat recovery section (14) by spraying water (19) into the flue gas.

4. A method according to any of the preceding claims, characterised in that the direction of flow of the heat exchange fluid through the sensible heat recovery section (12,22) is generally in the same direction as the flue gas flow through that sensible heat recovery section.

5. A method according to any of the preceding claims, characterised in that the temperature at the inlet to the sensible heat recovery section (12,22) is maintained sufficiently high by recirculating through that section (12,22) a portion of the heat-exchange fluid already heated therein.

6. A method according to any of the preceding claims, characterised in that the same heat exchange fluid is used for both sections (12,14; 22,23) of the economiser, valves controlling the flow of that heat exchange being operated appropriately in order to maintain the required conditions in the sections of the economiser within the required limits.

7. A condensing economiser installation having a sensible heat recovery section, a condensing latent heat recovery section, and means to circulate heat exchange fluid through said sections to recover heat from flue gases passed through the economiser, which installation is characterised by the provision of control valves arranged to cause counter-current flow for the heat exchange fluid in the sensible heat recovery section (12,22) when the economiser is to be operated in conjunction with a sweet fuel, and to cause co-current flow through the sensible heat recovery section (12,22) when the economiser is to be used with a sulphur-bearing fuel.

8. An economiser installation according to claim 7, characterised in that there are further valves which allow the circulation of the same heat exchange fluid through the two sections (12,14; 22,23) of the economiser arranged to proportion and divert the fluid as appropriate in order to obtain the required operating conditions within the two sections of the economiser, and preferably a temperature controlled valve arranged to control the flow conditions through the sensible heat recovery section.

9. An economiser installation according to claim 7 or claim 8, further characterised in that there is a heat exchanger (22C) disposed between the sensible heat recovery section (22) and the latent heat recovery section (23), along with appropriate pipe work and valves whereby the said heat exchanger (22C) may be configured to form part of the latent heat recovery section with condensing taking place therein when the installation is operated with sweet fuels, and for the said heat exchanger (22C) to form part of the sensible heat recovery section with no condensing taking place therein when the installation is operated with sulphur-bearing fuels.

10. An economiser installation according to any of claims 7 to 9, characterised in that there is means (19) to spray water into the flue gases on passing from the sensible heat recovery section (22) to the latent heat recover section (23).

11. An economiser installation according to any of claims 7 to 10, characterised in that there is provided a recirculation pump (28) arranged to recirculate through the sensible heat recovery section (22) a portion of the heat exchange fluid already heated in that section, when the installation is being used with a sulphur-bearing fuel.

12. A combustion heating plant whenever provided with an economiser installation according to any of claims 7 to 11, and adapted to operate in accordance with a method according to claims 1 to 6, and preferably a water-heating boiler plant wherein the cold boiler feed water is used as the heat exchange fluid which is passed through the two sections of the economiser.

FIG.1

HEAT SINK

10

PA  PC

17

RV

FLUE GAS OUT
(TO CONDITIONING)
IF FITTED

FLUE GAS IN

FLUE GAS

H

G

FI

18

RP

D

13

TE

F

E

12

11

A

B

14

CV

C

15

16

19

16A

CONDENSATE DRAIN

COLD WATER

PIC

8

FIG. 2

EP 0 434 395 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 288 695 (BOMMER)<br>* abstract *<br>— — — | 1 | F 24<br>D 12/02<br>F 22 B 37/02 |
| A | DE-A-3 508 272 (BUDERUS AG)<br>* abstract *<br>— — — | 1 | |
| A | EP-A-0 034 574 (FAGERSTA AB)<br>* abstract *<br>— — — — — | 1 | |
| | | | **TECHNICAL FIELDS SEARCHED (Int. Cl.5)**<br><br>F 24 D<br>F 22 B<br>F 24 H |

The present search report has been drawn up for all claims

| Place of search | Date of completion of search | Examiner |
|---|---|---|
| The Hague | 19 March 91 | VAN GESTEL H.M. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document